# FASCICULE DE BREVET EUROPEEN

(11) **EP 4 084 916 B1**
(45) Date de publication et mention de la délivrance du brevet: **21.02.2024**
(21) Numéro de dépôt: 20839123.5
(22) Date de dépôt: 30.12.2020
(51) Int. Cl.: B09B 3/00, A01G 18/00, A01G 18/20, A24F 47/00, B03B 1/00, B09B 5/00, B09C 1/10, C08J 11/08, D21C 5/00

(54) **PROCÉDÉ DE TRAITEMENT DE MÉGOTS DE CIGARETTES**
VERFAHREN ZUR BEHANDLUNG VON ZIGARETTENKIPPEN
PROCESS FOR TREATING CIGARETTE BUTTS

(30) Priorité: 31.12.2019 BE 201906014
(43) Date de publication de la demande: 09.11.2022
(73) Titulaire: Purifungi, 4102 Seraing (BE)
(72) Inventeur: SPEYER, Audrey, 1070 Anderlecht (BE)
(74) Mandataire: Calysta NV
(86) Numéro de dépôt international: PCT/EP2020/088017
(87) Numéro de publication internationale: WO 2021/136802

(56) Documents cités:
- EP-A1- 2 520 184
- FR-A1- 2 603 767
- US-A1- 2014 287 144

## Description

La présente invention se rapporte à un procédé de traitement de mégots de cigarettes. US2014287144 divulgue un procédé de recyclage de déchets d'acétate de cellulose provenant de matériaux post-industriels ou post-consommation

La présente invention se rapporte aussi à un biopolymère issu d'un procédé de traitement de mégots de cigarettes.

Un mégot de cigarettes est composé de fibres synthétiques d'acétate de cellulose et il s'agit de la partie qui ne peut pas être consommée dans une cigarette. Le mégot est un déchet dangereux voire toxique non biodégradable qui n'est actuellement pas recyclé, difficilement recyclable. Bien que la prise de conscience de la population augmente vis-à-vis de ce problème de pollution de l'environnement par ce déchet, celui-ci reste difficilement collectable.

En effet, les mégots sont généralement jetés à même le sol. Le ruissellement des eaux de pluies les emporte par les égouts dans lesquels les mégots vont stagner dans l'eau. Les substances toxiques se retrouvent alors dans des lixiviats de mégots lors de la percolation de l'eau dans les mégots, ce qui impacte l'environnement, en ce compris la faune et la flore qui sont contaminés par ces substances toxiques qui se trouvent dans les lixiviats.

Les mégots de cigarettes ont donc un impact néfaste sur l'environnement, que ce soit par les substances toxiques dégradées après combustion, brûlage ou chauffage de la cigarette, soit par les substances toxiques déjà présentes dans le filtre de la cigarette avant sa combustion, soit par les lixiviats de mégots.

Il est donc de plus en plus important d'inciter à la collecte en offrant des solutions qui plaisent au public, en particulier à tous ceux qui jettent facilement leurs mégots à même le sol. Malheureusement, généralement, bien que conscient de la pollution que représente les mégots, peu de fumeurs se préoccupent du sort de leurs mégots.

La présente invention a pour but d'apporter une solution attractive qui permet de traiter les mégots.

Pour ceci, il est prévu suivant l'invention un procédé de traitement de mégots de cigarettes pollués par des substances toxiques comprenant les étapes :
a. Une alimentation d'un contenant avec lesdits mégots de cigarettes, un substrat organique et de l'eau avec obtention d'un substrat de culture selon un premier ratio prédéterminé entre ledit substrat organique et lesdits mégots de cigarettes ;
b. Une inoculation dudit substrat de culture par au moins une souche de champignon selon un deuxième ratio prédéterminé entre ladite au moins une souche de champignon et ledit substrat de culture
c. Une phase de croissance de mycélium de ladite au moins une souche de champignon inoculée dans ledit substrat de culture avec obtention d'une culture de ladite au moins une souche de champignon pendant une première période de temps prédéterminée dans laquelle une première partie de substances toxiques est dégradée par l'activité enzymatique sécrétée par ladite au moins une souche de champignon en culture ;
d. Au moins une phase de fructification de ladite culture de ladite au moins une souche de champignon pour former des fruits de ladite au moins une souche pendant une deuxième période de temps prédéterminée avec un transfert ou séquestration d'une deuxième partie de substances toxiques du substrat de culture dans lesdits fruits ;
e. Une collecte desdits fruits desdits champignons ;
f. Une obtention d'un substrat de culture dépollué et déplété de ladite première partie de substances toxiques et de ladite deuxième partie de substance toxique ; et
g. Un séchage dudit substrat de culture dépollué et déplété avec obtention d'un biopolymère.

Comme on peut le constater le procédé selon la présente invention présente l'intérêt de procurer un biopolymère qui peut former un matériau innovant, résistant et attractif, en particulier pour la plus jeune génération. Selon la présente invention, les mégots formant la base du biopolymère sont déplétés au cours du traitement de substances toxiques et permettent de former un matériau utilisable à d'autres fins.

Avantageusement, ledit premier ratio prédéterminé pondéral entre ledit substrat organique et lesdits mégots de cigarettes est compris 60/40 et 0/100.

Dans une forme de réalisation préférentielle, ledit deuxième ratio prédéterminé entre ladite au moins une souche de champignon et ledit substrat de culture est compris entre 2 et 10% en poids de mycélium déposé dans le substrat de culture.

Plus particulièrement, ladite première période de temps prédéterminée est comprise entre 2 et 6 jours, de préférence entre 2.5 jours et 5.5 jours, préférentiellement entre 3 et 5 jours.

Avantageusement, ladite deuxième période de temps prédéterminée est comprise entre 7 jours et 62 jours, de préférence entre 8 et 25 jours, de préférence entre 9 et 15 jours, préférentiellement entre 10 jours et 12 jours.

Dans une forme de réalisation préférée selon la présente invention, la phase de croissance comprend une première sous-phase de de développement et une deuxième sous-phase de transfert.

Avantageusement, selon la présente invention, ladite inoculation dudit substrat de culture est réalisée avant, pendant ou après ladite alimentation d'un contenant avec lesdits mégots de cigarettes, un substrat organique éventuel et de l'eau avec obtention d'un substrat de culture.

De préférence, ladite inoculation dudit substrat de culture est réalisée sur le substrat de culture humide pour une meilleure répartition et propagation du traitement.

Alternativement, ladite phase de fructification comprend une exposition à la lumière de ladite culture de ladite au moins une souche de champignon, une diminution ou une augmentation de la température avec obtention d'un choc thermique de ladite culture de ladite au moins une souche de champignon et un apport en oxygène dans ladite culture de ladite au moins une souche de champignon.

Selon la présente invention, de préférence, ladite phase de croissance du mycélium est précédée par une fermeture dudit contenant comprenant le substrat de culture.

Dans une variante avantageuse de l'invention, une éventuelle étape de pasteurisation ou stérilisation dudit substrat de culture humide est effectuée avant ladite alimentation dudit contenant avec lesdits mégots de cigarettes, un substrat organique éventuel et de l'eau.

D'autres formes de réalisation du procédé suivant l'invention sont indiquées dans les revendications annexées.

L'invention a aussi pour objet un biopolymère obtenu par le procédé suivant l'invention.

Le biopolymère selon la présente invention comprend ledit substrat de culture dépollué et déplété de ladite première partie de substances toxiques et de ladite deuxième partie de substance toxique, ledit substrat de culture étant séché.

Avantageusement, ledit biopolymère comprend lesdits mégots dépollués dans du mycélium enchevêtré.

Comme décrit précédemment, la présente invention se rapporte à un procédé de traitement de mégots de cigarettes pollués par des substances toxiques comprenant les étapes :
h. Une alimentation d'un contenant avec lesdits mégots de cigarettes, un substrat organique et de l'eau avec obtention d'un substrat de culture selon un premier ratio prédéterminé entre lesdits mégots de cigarettes et ledit substrat organique ;
i. Une inoculation dudit substrat de culture par au moins une souche de champignon selon un deuxième ratio prédéterminé entre ladite au moins une souche de champignon et ledit substrat de culture ;
j. Une phase de croissance de mycélium de ladite au moins une souche de champignon inoculée dans ledit substrat de culture avec obtention d'une culture de ladite au moins une souche de champignon pendant une première période de temps prédéterminée dans laquelle une première partie de substances toxiques est dégradée par l'activité enzymatique sécrétée par ladite au moins une souche de champignon en culture ;
k. Au moins une phase de fructification de ladite culture de ladite au moins une souche de champignon pour former des fruits de ladite au moins une souche pendant une deuxième période de temps prédéterminée avec un transfert ou séquestration d'une deuxième partie de substances toxiques du substrat de culture dans lesdits fruits ;
l. Une collecte desdits fruits desdits champignons ;
m. Dépollution des mégots de cigarette via une réaction enzymatique issue d'une culture de champignons.
n. Une obtention d'un substrat de culture dépollué et déplété de ladite première partie de substances toxiques et de ladite deuxième partie de substance toxique ; et
o. Un séchage dudit substrat de culture dépollué et déplété avec obtention d'un biopolymère

La présente invention implique donc un processus de digestion des mégots de cigarette sous l'action de la croissance de culture de champignons et la fabrication d'un biopolymère à l'issue de la dépollution de mégots de cigarette.

Les champignons possèdent des capacités de digestion de la matière organique et inorganique qu'ils trouvent sur leur passage dans l'environnement. Ils transforment cette matière pour leur propre développement, en l'utilisant comme nutriments de croissance. Le mycélium recouvre la matière et la décompose afin que son réseau racinaire, le mycélium, atteigne une croissance ultime. Une fois la matière complètement colonisée, l'organisme a suffisamment de ressources pour lancer l'étape de fructification : la sortie des sporocarpes ou sporophores. Cette matière qui sert de croissance au champignon s'appelle substrat quand elle est dans un milieu recréé.

### Substrat de culture

Selon la présente invention, le substrat de culture préféré se compose de mégots de cigarette usagées ou non et entiers, mixés ou coupés ainsi que d'un substrat organique éventuel qui stimule la culture à se développer. Les mégots de cigarette sont composés de :
- papier ;
- résidus de tabac brûlé et non brulé ;
- filtres de diverses marques de cigarette dont la matière s'appelle acétate de cellulose, une forme de plastique ;
- cendres résiduelles.

Alternativement, selon une variante de la présente invention, les mégots de cigarettes peuvent être préalablement coupés en morceau dans un broyeur afin que la digestion soit plus rapide et plus effective. Il sera préférable de réaliser cette étape de broyage tout en y pulvérisant de l'eau afin de réduire et contrôler la propagation des COV (Composés Organiques Volatiles) et de la pollution des mégots de cigarettes dans l'air.

Le substrat organique préféré est de la copeaux de bois non traitée composée de particules d'environ 5mm. Il est intéressant d'utiliser un paillis de chanvre de longueurs approximative de 5 à 10mm. Le substrat peut aussi se composer d'autres matières riches en carbone : paille, sciure de bois, carton, céréales (riz, grains de blés, épis de maïs). Le substrat organique ne doit pas être trop épais ou en trop gros morceaux ni trop petit ou en poudre.

Le choix du substrat organique aura une incidence sur les qualités de structuration, d'aspect et les propriétés mécaniques du biopolymère produit à la fin du traitement. Il est préférable d'utiliser un substrat organique non grossier et homogène tout en offrant une source nutritive suffisamment important pour la souche de champignons. Le substrat de culture pourra par exemple être complété par du sable, gravier, silice ou glycérine qui aura une influence sur la croissance du champignon et les propriétés matériau (force de compression et inflammabilité plus élevée) du biopolymère.

### Souches de champignons

Ladite au moins une souche de champignons est composée de préférence de champignons saprophytes primaires, à savoir de champignons formant une moisissure blanche ("White rot") et/ou de champignons de la famille basidiomycète. De préférence, pour la famille des saprophytes, au moins une souche de champignons est de l'espèce Pleurotus, plus particulièrement, du genre *Pleurotus ostreatus* et/ou *Pleurotus salmoneo stramineus.* De préférence, pour la famille des basidiomycètes, au moins une souche de champignons est de l'espèce Trametes, plus particulièrement du genre *Tramete versicolor* et/ou *Tramete hirsute.*

Dans une variante selon la présente invention, ladite au moins une souche de champignons est de l'espèce Picnoporus (et plus particulièrement *Picnoporus coccineus*), *Phanerochaete chrysosporium* et/ou Ganoderma lucidum.

Dans une autre variante selon la présente invention, ladite au moins une souche de champignons est de l'espèce *Porcin; "Boletus Edulis"* et/ou *Agaricus bisporus.*

### Système enzymatique

Ladite au moins une souche de champignons possède un système enzymatique qui présente la capacité de dégrader la totalité des polymères constitutifs du bois (cellulose/lignine) grâce à la sécrétion de systèmes enzymatiques oxydatifs et hydrolytiques complexes. Lors de la dégradation enzymatique, une première partie de substances organiques tels que les hydrocarbures et inorganiques tels que les métaux lourds (séquestration), anthracènes, insecticides sont également métabolisés et/ou dégradés par le système enzymatique de la culture de ladite au moins une souche de champignons.

Les enzymes sécrétés par les champignons "White rot" sont typiquement des peroxydases, comme des lignine peroxydases, des manganèse peroxydases, et des laccases (Paul Stamets "Mycélium Running, cité de Schliephake et al. 2003). Seuls les champignons de moisissure blanche synthétisent les enzymes peroxydases manganèses dépendants lesquelles hydrolysent les liaisons Hydrogène-Carbone. D'autres enzymes telles que les enzymes ligninases et celluloses sont produits par le mycélium et sécrétés dans le substrat de culture.

Les enzymes sécrétés par l'espèce Picnoporus coccineus sont d'un autre groupe appelé LPMO (lytic polysaccharides monooxygénases) qui présente des propriétés de dégradation très efficaces du bois (le xylane qui résiste aux hydrolases classiques).

### Mycoremédiation - Technique

Ces propriétés de digestion de substances organiques et inorganiques ont donné naissance à une technique de traitement de terrains pollués appelée mycoremédiation. Bien qu'elle reste au stade de développement, cette technique a fait preuve de nombreux résultats positifs sur plusieurs terrains contaminés en hydrocarbures, métaux lourds et/ou insecticides / pesticides (...).

Les champignons contiennent de la chitine dans leurs parois qui peut tolérer de fortes concentrations de métaux et est capable de croître sur un milieu à faible pH et température présentant un excellent potentiel de mycoremédiation.

### Mycoremédiation sur mégots

Selon la présente invention, il est prévu d'utiliser des souches de champignons spécifiques à la pollution des mégots de cigarette comprenant de l'acétate de cellulose ainsi que des polluants. La technique de la mycoremédiation est ciblée sur une matière "traitable" en laboratoire - dans les conditions idéales de culture - en comparaison de la mycoremédiation d'une parcelle de terrain pollué.

### Polluants des mégots (entre 4000 à 5000 substances)

Les substances toxiques présentes dans les mégots de cigarettes issus de la combustion du tabac et de leurs additifs comprennent les substances suivantes, qui est une liste non exhaustive :
Nicotine
Goudron (hydrocarbures aromatiques polycycliques (HAP), des amines aromatiques et des composés inorganiques)

### Composés organiques tels

Éthylphénol
Acétone

### HAP:

Benzène, Benzo(a)pyrene
Xylène (diméthylbenzène)
Pyrène
Toluène
Acénaphtylène
Anthracène
Fluorène
Phénanthrène
Pyrène
Naphtalène

### Hydrocarbure saturé (Alcane):

Butane

### Aldéhyde:

Éthanol (Acétaldéhyde)
Acroléine
Formaldéhyde
Ammoniac

### Alcool:

Méthanol

### Radionucléide naturel:

Polonium 210

### Métalloles :

Furane
Uréthane (pesticide)
Méthoprène (insecticide)
DDT (insecticide)
N-nitrosamines
Tungstate de sodium
Dioxyde de titane
Naphtylamine
Chlorure de Vinyle
Acide cyanhydrique (acide cyanhydrique)
Térébenthine
Dimethylnitrosamine

### Métaux lourds:

Plomb, cadmium, baryum, fer, manganèse, strontium, phosphore, mercure, arsenic.

Le procédé selon la présente invention comprend une première étape et une deuxième étape comme suit :
- Une alimentation d'un contenant avec lesdits mégots de cigarettes, un substrat organique éventuel et de l'eau avec obtention d'un substrat de culture selon un premier ratio prédéterminé entre lesdits mégots de cigarettes et ledit substrat organique ;

### Cette étape peut-être plus préférentiellement réalisée selon les conditions suivantes :

- **Préparation des substrats. Les substrats sont** composés de "mégots + substrat organique", ils doivent être remplis d'eau mais ne doivent pas relâcher de l'eau.
- Pour le substrat "organique": trempage pendant 4 à 6 heures selon la température et le taux d'humidité du lieu.
- **Égouttage** du substrat. Répartition du substrat organique dans des sacs spéciaux ou dans des containers spéciaux pour culture de champignon.
   Sacs ou containers de cultures de champignon : plastique PP - Polypropylène - ou PE - Polyéthylène - avec 2 à 3 lignes ou points de filtre pour avoir un minimum d'échange d'air filtré pour la culture).
- Sacs ou containers de culture disposés dans l**'autoclave** (4h)
- **Refroidissement des sacs ou containers de culture** (3h minimum selon la température du lieu)
- **Broyage** des mégots (5 mm de longueur). Il sera préférable de les broyer tout en y aspergeant de l'eau afin de réduire la propagation des particules COV dans l'air.
- Pour le substrat "mégots broyés", il sera uniquement aspergé d'eau afin de les imbiber d'eau sans les saturer d'eau. Le mégot sera chargé d'eau mais n'en relâchera pas. Ceci pour éviter une migration de la pollution vers l'eau.
- Ajout du substrat organique dans le sac ou le container contenant le substrat "mégots broyés" en milieu stérile.
- Eventuellement : pasteurisation des mégots dans l'autoclave afin de réduire les risques de contamination dans le substrat de culture. En effet en milieu humide, la compétition des espèces est importante et il peut être recommandé de réaliser une pasteurisation sur substrat organique et mégots (qui peut se faire simultanément dans le substrat de culture) pour réduire le risque de contamination et favoriser le développement de l'espèce choisi et inoculé pour le traitement. Le substrat organique chargé d'eau et les mégots humides et broyés sont alors mis en sac ou containers de culture avant l'autoclave.

- Une inoculation dudit substrat de culture par au moins une souche de champignon selon un deuxième ratio prédéterminé entre ladite au moins une souche de champignon et ledit substrat de culture.
- Les containers doivent être ventilés un minimum lors de la croissance du mycélium et de la fructification. Cela peut être réalisé, par exemple par des canaux de respiration qui garantissent que la culture ne sera pas asphyxiée.

### Cette étape peut-être plus préférentiellement réalisée selon les conditions suivantes :

- Inoculation à 2 à 7 % en poids, plus particulièrement de 2 à 5 % en poids (du poids total du substrat) de mycélium de l'espèce de champignon
- **Fermeture** des sacs de cultures par presse chauffante ou fermeture des containers par le couvercle.
- **Mélanger** le substrat et **casser** les morceaux de mycélium afin qu'il soit réparti de manière homogène dans le sac ou le container.

### Les conditions de culture

La présente invention comprend une étape de croissance de mycélium (appelée incubation) de ladite au moins une souche de champignon inoculée dans ledit substrat de culture avec obtention d'une culture de ladite au moins une souche de champignon pendant une première période de temps prédéterminée dans laquelle une première partie de substances toxiques est dégradée par l'activité enzymatique sécrétée par ladite au moins une souche de champignon en culture.

Ladite au moins une souche préférée est *Pleurotus ostreatus* qui présente la capacité de croissance rapide et de rendement de culture très élevé sur un substrat organique recommandé contenant un mélange de sciure et/ou copeaux de bois et/ou de paille de chanvre qui subira une Pasteurisation en vrac jusqu'à obtenir une température du substrat de culture au centre à 62 degrés pendant minimum 4 heures.

Si la souche est plutôt *Pleurotus salmoneo stramineus, alors le substrat est principalement composé de bois dur et de paille de chanvre.*

### Phase d'inoculation:

Le substrat est inoculé par entre 2 et 7% en poids de mycélium de ladite au moins une souche de champignon (*Pleurotus ostreatus*) et placé dans un sac PE ou HDPE, perforé tous les 10 - 15 cm avec 2 à 3 lignes de filtre sur le milieu-haut du sac.

Les conditions de culture et de croissance du mycélium (appelée incubation) sont comme suit pour *Pleurotus ostreatus* :
Humidité du substrat : 70-73%
Incubation : à l'abris de la lumière
Température d'incubation : 20-22 °C
Température du substrat : 25-30 °C
Durée : 19- 22 jours.

Pour *Pleurotus salmoneo stramineus,* les conditions de culture et de croissance du mycélium (appelée incubation) sont identiques, mais la durée est de 13 à 16 jours.

Pour Tramete versicolor, les conditions de culture sont identiques. En ce qui concerne les conditions d'incubation :
Humidité du substrat : 90 à 100%
Incubation : à l'abris de la lumière
Température d'incubation : 24-29°C
Durée : 14 à 21 jours
Concentration en CO₂ supérieure à 5000 ppm
Echange d'air frais; 1 par heure.

Pour Ganoderma lucidum, les conditions de culture sont identiques avec un substrat organique humide tel que le bois dur (en bûches) ou en copeaux de chêne, d'orme, de hêtre, de bouleau, d'aulne, d'érable, d'épicéa, ou des céréales tels que le seigle. En ce qui concerne les conditions d'incubation :
Incubation réalisée à l'abris de la lumière
Température d'incubation : 19-22°C
Durée d'incubation : 10-14 jours.

▪ De préférence, pendant l'étape d'incubation : les sacs doivent être espacés avec un écart de 5 cm car les sacs relâchent de la chaleur et ne doivent pas être surchauffés par les cultures voisines.

### Cette étape peut-être plus préférentiellement réalisée selon les conditions suivantes :

- **Incubation** : Développement de la culture pendant 3 à 5 jours ou 7 à 10 jours (voir dans les caractéristiques ci-dessus) dans un environnement sans lumière.
   ∘ De préférence, pendant l'incubation, les sacs ou les containers doivent être espacés car les sacs ou les containers relâchent de la chaleur. Cette chaleur ne doit pas surchauffer les cultures voisines.
- Eventuellement **Transfert** de la culture dans un moule dans les conditions stériles, étape où le mycélium est à nouveau stimulé est réparti.
Cette deuxième incubation permet de former le biopolymère pour qu'il soit ensuite directement séché et soit utilisable dans forme (biofabrication).

La présente invention comprend une étape de fructification de ladite culture de ladite au moins une souche de champignon pour former des fruits de ladite au moins une souche pendant une deuxième période de temps prédéterminée avec un transfert d'une deuxième partie de substances toxiques du substrat de culture dans lesdits fruits.

L'étape de fructification permet la production de grappes de fruits lourds mais nombreux à une température inférieure à 20 degrés gris-brun. Les champignons de l'espèce *Pleurotus Ostreatus* sont épais, d'un diamètre de 7 à 10 cm minimum et à tiges courtes.

### Déclenchement de fructification Pleurotus ostreatus:

- Température : inférieure à 5-20 °C
- Humidité relative : 90- 95 %

### Conditions de fructification

- Température de la pièce : (5-) 10-17 (-20) °C
- Humidité relative : 85%
- Concentration CO₂ : inférieure à 1000 ppm
- Lumière : 800- 1500 lux ou lumière du jour
- Fructification (nbr) : 2-3
- Intervalles : 1 à 2 semaines

### Entre les fructifications :

- Humidité relative augmente à 90%
- Cycle de production total : Ca. 3 mois
- Poids de chaque fructification : 200 à 250 g champignon par kg de substrat frais

*Pleurotus ostreatus* présente les mêmes avantages que les souches précédentes. Toutefois, les caractéristiques de fructification sont différentes: à une température supérieure à 19 degrés, de nombreux amas de fruits se forment avec des dimensions variables (de 7 à 12 cm de diamètre). A température plus basse, couleur et forme déclinent

Par exemple, les conditions de formation de primordias pour *Tramete versicolor* sont les suivantes:
Température: 10 - 27° C
Taux d'humidité: 95 à 100%
Durée: 7 à 14 jours
Concentration en CO₂: 400-800 ppm
Échange d'air frais: entre 5 et 7 par heure
Lumière requise: 500-2000 lux

Les conditions pour la fructification sont les suivantes:
Température: 18-24°C
Taux d'humidité: 85 à 95%
Durée: 45 à 70 jours
Concentration en CO₂: 500 -1000 ppm
Échange d'air frais: entre 5 et 7 par heure
Lumière requise: entre 500 et 2000 ppm
Récolte: 2 ou 3 récoltes sur 3 mois.

Dans un autre exemple, les conditions de déclenchement de fructification pour *Ganoderma lucidum* sont les suivantes:
Une température abaissée à 18°C
Une humidité relative: 95%

Les conditions de fructifications sont les suivantes:
Température: 16-25°C, de préférence 19-22 °C
Humidité relative : 85-90%
Durée: plus de 30 jours

Pour *Pleurotus salmoneo stramineus,* les conditions de culture et d'incubation du mycélium sont identiques, mais les conditions d'incubation idéales sont à une température entre 24 et 30 °C et la durée de 13 à 16 jours. Il est préférable de baisser la température (18°C-25°C) après 7 à 10 jours d'incubation puis de remonter (20°C-30°C) pour la ou les fructification(s).

Dans une variante selon la présente invention, au moins une souche de champignon est *Pleurotus salmoneo stramineus.*

### Déclenchement de fructification Pleurotus salmoneo stramineus:

- Température : inférieure à 18-24 °C
- Humidité relative : 90- 95 %

### Conditions de fructification

- Température de la pièce : 18-28 °C
- Humidité relative : 85-90 %
- Concentration CO₂: inférieure à 1000 ppm
- Lumière : 800- 1500 lux ou lumière du jour
- Fructification (nombre) : 2-3
- Intervalles : 10-12 jours

### Entre les fructifications :

- Humidité relative augmente à 90-95%
- Cycle de production total : Ca. 2,5 mois
- Poids de chaque fructification : 150-200 g champignon par kg de substrat frais (les champignons sont ici considéré comme résidus toxiques de production).

### Le ratio mégots/substrat organique/inoculum

Le ratio pondéral mégots/substrat organique est typiquement entre 40/60 - 95-5, de préférence entre 40/60 et 60/40. Le substrat est inoculé avec un taux de 2 à 10% du poids total du substrat de culture.

Le ratio mégots/substrat organique/inoculum peut être de 100/0, lorsque le substrat de culture comprend des mégots mais ne comprend pas de substrat organique.

Cette étape peut-être plus préférentiellement réalisée selon les conditions suivantes :
- Quand le transfert de culture est effectué dans un moule : Après 7 à 25 jours à la suite du transfert de la culture (voir ci-dessus), et quand le mycélium s'est développé sur l'ensemble du substrat (: une matière blanche filamenteuse a recouvert l'ensemble du substrat), **démouler** les cultures dans un espace de fructification : un espace stérile, avec un flux d'air, un taux d'humidité constant et une source de lumière indirecte ou artificiel.
- Quand les cultures continuent leur croissance dans les sacs ou les containers, les placer dans l'espace de fructification et les ouvrir.
- Les cultures **fructifient** : il peut y avoir entre 1, 2 à 3 fructifications selon les conditions environnementales et le développement initial du mycélium.
- Pour stimuler la fructification, un **choc thermique** (diminution ou éventuellement augmentation de la température : passage pour quelque heures (4 à 8h) dans un frigo (température à vérifier selon les espaces : pas trop froid pour les *Pleurotes Salmoneo stramineus*) suivi d'un apport d'oxygène (: ouverture des moules/containers de culture).

### Les conditions pour la collecte des champignons et leurs stockages

Après fructification, les champignons sont recueillis avec des gants de protection et un dispositif respiratoire filtrant (masque) et isolés dans des containers de stockage. Les résidus les plus toxiques tels que les métaux lourds y sont stockés, la matière est donc toxique avec les résidus du traitement.

Ce "déchet" peut faire l'objet d'analyse de toxicité et sera ensuite traité en externe, composté pour en réduire sa volumétrie, revalorisé en laboratoire ou disposé dans une vitrification pour faire une inertie de la matière toxique.

### Les conditions de séchage

Le reste de la culture sera séché de deux manières possibles:
- Naturelle dans un environnement sec ou par rayonnement du soleil,
- Artificielle dans un four à 60 degrés pendant 4 à 5h.

La culture doit ici perdre son taux d'humidité et permet au matériau de se solidifier et de s'homogénéiser.

### Les finitions éventuelles

Une finition avec un vernis naturel, une cire ou un ciment est possible afin d'augmenter les applications de ce matériau. Nous préférerons des finitions naturelles.

Il est bien entendu que la présente invention n'est en aucune façon limitée aux formes de réalisations décrites ci-dessus et que bien des modifications peuvent y être apportées sans sortir du cadre des revendications annexées.

Ce protocole de mycoremédiation est ici spécifié à partir de mégots de cigarette usagées mais il peut aussi être utilisé sur des constituants des cigarettes avant utilisation comme par exemple les filtres avant même qu'ils soient utilisés dans la production des mégots ou pour des résidus du tabac. Ainsi le protocole est utile également pour réduire les déchets issus de la production de cigarette.

Le protocole peut aussi être utilisé pour réduire les résidus toxiques issus d'une autre technique de recyclage des mégots de cigarette. Si les mégots sont lavés pour diviser le contenant (filtres de cigarettes) du contenu (pollution et boues de tabac), le protocole de mycoremédiation pourra être utilisé sur les déchets pollués de cette méthode de recyclage des mégots : les boues de tabac polluées.

## Revendications

1. Procédé de traitement de mégots de cigarettes pollués par des substances toxiques comprenant les étapes :
a. Une alimentation d'un contenant avec lesdits mégots de cigarettes, un substrat organique éventuel et de l'eau avec obtention d'un substrat de culture selon un premier ratio prédéterminé entre ledit substrat organique et lesdits mégots de cigarettes;
b. Une inoculation dudit substrat de culture par au moins une souche de champignon selon un deuxième ratio prédéterminé entre ladite au moins une souche de champignon et ledit substrat de culture;
c. Une phase de croissance de mycélium de ladite au moins une souche de champignon inoculée dans ledit substrat de culture avec obtention d'une culture de ladite au moins une souche de champignon pendant une première période de temps prédéterminée dans laquelle une première partie de substances toxiques est dégradée par l'activité enzymatique sécrétée par ladite au moins une souche de champignon en culture ;
d. Une phase de fructification de ladite culture de ladite au moins une souche de champignon pour former des fruits de ladite au moins une souche pendant une deuxième période de temps prédéterminée avec un transfert d'une deuxième partie de substances toxiques du substrat de culture dans lesdits fruits ;
e. Une collecte desdits fruits desdits champignons ;
f. Une obtention d'un substrat de culture dépollué et déplété de ladite première partie de substances toxiques et de ladite deuxième partie de substance toxique ; et
g. Un séchage dudit substrat de culture dépollué et déplété avec obtention d'un biopolymère.

2. Procédé selon la revendication 1, dans lequel ledit premier ratio prédéterminé entre ledit substrat organique et lesdits mégots de cigarettes est compris entre 60/40 et 0/100.

3. Procédé selon la revendication 1 ou 2, dans lequel ledit deuxième ratio prédéterminé entre ladite au moins une souche de champignon et ledit substrat de culture est compris entre 2et 10% en poids.

4. Procédé selon l'une quelconque des revendications précédentes, dans lequel ladite première période de temps prédéterminée est comprise entre 2 et 6 jours, de préférence entre 2.5 jours et 5.5 jours, préférentiellement entre 3 et 5 jours.

5. Procédé selon l'une quelconque des revendications précédentes, dans lequel ladite deuxième période de temps prédéterminée est comprise entre 7 jours et 25 jours, de préférence entre 9 et 15 jours, préférentiellement entre 10 jours et 12 jours.

6. Procédé selon l'une quelconque des revendications précédentes, dans lequel la phase de croissance comprend une première sous-phase de développement et une deuxième sous-phase de transfert.

7. Procédé selon l'une quelconque des revendications précédentes, dans lequel ladite inoculation dudit substrat de culture est réalisée avant, pendant ou après ladite alimentation d'un contenant avec lesdits mégots de cigarettes, un substrat organique éventuel et de l'eau avec obtention d'un substrat de culture.

8. Procédé selon l'une quelconque des revendications précédentes, dans lequel ladite phase de fructification comprend une exposition à la lumière de ladite culture de ladite au moins une souche de champignon, une diminution ou augmentation de la température avec obtention d'un choc thermique de ladite culture de ladite au moins une souche de champignon et un apport en oxygène dans ladite culture de ladite au moins une souche de champignon.

9. Procédé selon l'une quelconque des revendications précédentes, dans lequel ladite phase de croissance est précédée par une fermeture dudit contenant comprenant le substrat de culture.

10. Procédé selon l'une quelconque des revendications précédentes, dans lequel une éventuelle étape de pasteurisation dudit substrat organique est effectuée avant ou après ladite alimentation dudit contenant avec lesdits mégots de cigarettes, un substrat organique et de l'eau.

11. Biopolymère obtenu par le procédé suivant l'une quelconque des revendications précédentes.

## Patentansprüche

1. Verfahren zum Behandeln von Zigarettenstummeln, die durch toxische Substanzen verunreinigt sind, umfassend die folgenden Schritte:
a. Beschicken eines Behälters mit den Zigarettenstummeln, einem möglichen organischen Substrat und Wasser mit Erlangen eines Kultursubstrats gemäß einem ersten vorbestimmten Verhältnis zwischen dem organischen Substrat und den Zigarettenstummeln;
b. Inokulieren des Kultursubstrats mit mindestens einem Pilzstamm gemäß einem zweiten vorbestimmten Verhältnis zwischen dem mindestens einen Pilzstamm und dem Kultursubstrat;
c. eine Wachstumsphase des Myzeliums des mindestens einen Pilzstamms, der in das Kultursubstrat inokuliert wurde, mit Erlangen einer Kultur des mindestens einen Pilzstamms über eine erste vorbestimmte Zeitdauer, in der ein erster Teil der toxischen Substanzen durch die enzymatische Aktivität, die von dem mindestens einen Pilzstamm in Kultur sezerniert wird, abgebaut wird;
d. eine Fruchtperiode der Kultur des mindestens einen Pilzstammes, um während einer zweiten vorbestimmten Zeitdauer Früchte des mindestens einen Stamms mit einem Transfer eines zweiten Teils von toxischen Substanzen aus dem Kultursubstrat in die Früchte zu bilden;
e. Sammeln der Früchte der Pilze;
f. Erlangen eines Kultursubstrats, das von dem ersten Teil der toxischen Substanzen und dem zweiten Teil der toxischen Substanzen aufgereinigt und abgereichert wurde; und
g. Trocknen des aufgereinigten und abgereicherten Kultursubstrats mit Erlangen eines Biopolymers.

2. Verfahren nach Anspruch 1, wobei das erste vorbestimmte Verhältnis zwischen dem organischen Substrat und den Zigarettenstummeln zwischen 60/40 und 0/100 ist.

3. Verfahren nach Anspruch 1 oder 2, wobei das zweite vorbestimmte Verhältnis zwischen dem mindestens einen Pilzstamm und dem Kultursubstrat zwischen 2 und 10 Gewichts-% ist.

4. Verfahren nach einem der vorherigen Ansprüche, wobei die erste vorbestimmte Zeitperiode zwischen 2 und 6 Tagen, vorzugsweise zwischen 2,5 und 5,5 Tagen, bevorzugt zwischen 3 und 5 Tagen, liegt.

5. Verfahren nach einem der vorherigen Ansprüche, wobei die zweite vorbestimmte Zeitperiode zwischen 7 Tagen und 25 Tagen, vorzugsweise zwischen 9 und 15 Tagen, bevorzugt zwischen 10 Tagen und 12 Tagen, liegt.

6. Verfahren nach einem der vorherigen Ansprüche, wobei die Wachstumsphase eine erste Entwicklungsteilphase und eine zweite Übertragungsteilphase umfasst.

7. Verfahren nach einem der vorherigen Ansprüche, wobei das Inokulieren mit dem Kultursubstrat vor, während oder nach dem Beschicken eines Behälters mit den Zigarettenstummeln, einem möglichen organischen Substrat und Wasser mit Erlangen eines Kultursubstrats durchgeführt wird.

8. Verfahren nach einem der vorherigen Ansprüche, wobei die Fruchtperiode umfasst, dass die Kultur des mindestens einen Pilzstamms Licht ausgesetzt wird, die Temperatur mit Erlangen eines Hitzeschocks der Kultur des mindestens einen Pilzstammes gesenkt oder erhöht wird und Sauerstoff in die Kultur des mindestens einen Pilzstamms eingebracht wird.

9. Verfahren nach einem der vorherigen Ansprüche, wobei der Wachstumsphase ein Verschließen des Behälters, der das Kultursubstrat umfasst, vorausgeht.

10. Verfahren nach einem der vorherigen Ansprüche, wobei ein möglicher Schritt einer Pasteurisierung des organischen Substrats vor oder nach Beschicken des Behälters mit den Zigarettenstummeln, einem organischen Substrat und Wasser durchgeführt wird.

11. Biopolymer, das durch das Verfahren nach einem der vorherigen Ansprüche erlangt wird.

## Claims

1. Method for processing cigarette butts polluted with toxic substances comprising the steps:
a. feeding a container with said cigarette butts, a possible organic substrate and water, obtaining a culture substrate according to a first predetermined ratio between said organic substrate and said cigarette butts;
b. inoculating said culture substrate by at least one strain of fungus according to a second predetermined ratio between said at least one strain of fungus and said culture substrate;
c. a mycelium growth phase of said at least one inoculated fungus strain in said culture substrate, obtaining a culture of said at least one fungus strain for a first predetermined period of time in which a first portion of toxic substances is degraded by the enzymatic activity secreted by said at least one cultured fungus strain;
d. a fruiting phase of said culture of said at least one strain of fungus to form fruits of said at least one strain for a second predetermined period of time with a transfer of a second portion of toxic substances from the culture substrate in said fruits;
e. collecting said fruits of said fungi;
f. obtaining a culture substrate which is depolluted and cleared of said first portion of toxic substances and said second portion toxic substances; and
g. drying said depolluted and cleared culture substrate and obtaining a biopolymer.

2. Method according to claim 1, wherein said first predetermined ratio between said organic substrate and said cigarette butts is between 60/40 and 0/100.

3. Method according to claim 1 or 2, wherein said second predetermined ratio between said at least one strain of fungus and said culture substrate is between 2 and 10% by weight.

4. Method according to any of the preceding claims, wherein said first predetermined period of time is between 2 and 6 days, preferably between 2.5 days and 5.5 days, preferably between 3 and 5 days.

5. Method according to any of the preceding claims, wherein said second predetermined period of time is between 7 days and 25 days, preferably between 9 and 15 days, preferably between 10 days and 12 days.

6. Method according to any of the preceding claims, wherein the growth phase comprises a first development sub-phase of and a second transfer sub-phase.

7. Method according to any of the preceding claims, wherein said inoculation of said culture substrate is carried out before, during or after said feeding of a container with said cigarette butts, an optional organic substrate and water obtaining a culture substrate.

8. Method according to any of the preceding claims, wherein said fruiting phase comprises exposing said culture of said at least one strain of fungus to light, decreasing or increasing the temperature, obtaining a heat shock of said culture of said at least one strain of fungus and supplying oxygen to said culture of said at least one strain of fungus.

9. Method according to any of the preceding claims, wherein said growth phase is preceded by closing said container comprising the culture substrate.

10. Method according to any of the preceding claims, wherein an optional pasteurization step of said organic substrate is performed before or after feeding said container with said cigarette butts, organic substrate and water.

11. Biopolymer obtained by the method according to any of the preceding claims.
